# EUROPEAN PATENT SPECIFICATION

(11) **EP 2 117 926 B1**
(45) Date of publication and mention of the grant of the patent: **26.12.2018**
(21) Application number: 08727450.2
(22) Date of filing: 09.01.2008
(51) Int. Cl.: B64C 27/06, B64C 27/54, B64C 27/56, B64D 15/20, B64D 15/22

(54) **ICE RATE METER WITH VIRTUAL ASPIRATION**
EISGESCHWINDIGKEITSMESSER MIT VIRTUELLER ASPIRATION
DISPOSITIF DE MESURE DU TAUX DE GIVRAGE À ASPIRATION VIRTUELLE

(30) Priority: 10.01.2007 US 879967 P
(43) Date of publication of application: 18.11.2009
(73) Proprietor: Sikorsky Aircraft Corporation, Stratford, CT 06615 (US)
(72) Inventor: FLEMMING, Robert James, Trumbull, CT 06611 (US)
(74) Representative: Schmitt-Nilson Schraud Waibel Wohlfrom Patentanwälte Partnerschaft mbB
(86) International application number: PCT/US2008/050572
(87) International publication number: WO 2008/086391

(56) References cited:
- EP-A1- 1 254 833
- JP-A- 06 337 255
- KR-A- 20060 117 302
- US-A- 4 441 363
- US-A1- 2004 024 538
- US-B2- 6 847 903

## Description

### BACKGROUND

The present application claims priority to United States Provisional Patent Application Serial No. 60/879,967, filed 10 January 2007.

The present invention relates to an ice rate meter with a virtual aspiration effect which eliminates bleed air aspiration.

Aircraft may encounter atmospheric conditions that may cause the formation of ice. Accumulated ice, if not removed, may add weight to the aircraft and may alter the aircraft flying characteristics.

Aircraft ice rate meters detect icing conditions and quantify the intensity of the icing condition. Current ice rate meters may have reduced accuracy over some portion of the aircraft flight envelope. Vertical takeoff and landing (VTOL) aircraft operate over a wide range of airspeeds and are particularly susceptible to reduced ice rate meter accuracy over the expansive VTOL aircraft flight envelope.

To increase accuracy over these portions of the aircraft flight envelope, the ice rate meter is provided with an added velocity. This added velocity is typically achieved through aspiration where engine bleed air is ducted to the ice rate meter probe to induce additional airflow into the ice rate meter probe. An aspirated ice rate meter includes an air duct extending from the engine to the probe and as a result there may be some measure of engine power loss from usage of the engine bleed air.

The high bleed air temperature and pressure of gas turbine engines may complicate conventional ice rate meter design. Some ice rate meter designs also require bleed air filtering and bleed air metering to purify and control the engine bleed air utilized for aspiration which may increase system weight and complexity. Furthermore, engine bleed air temperature and pressure varies with engine power settings which may affect the accuracy of an aspirated probe.

US 2004/024538 A1 discloses an apparatus for determining liquid water content in a body of air. Ice accretion on a probe is detected with various ice detectors to provide a signal indicating the rate of ice accretion. The rate of change of ice accretion is determined and is combined with parameters including air velocity, air pressure and air temperature for providing a signal that indicates liquid water content in the airflow, as well as ice accretion on the ice detector.

The document is considered as being the closest prior art and discloses the preamble of independent claim 1.

EP 1 254 833 A1 describes an an ice detector which has a pair of probes, each of which is used for determining the accretion of ice thereon. One of the probes in the assembly is configured so that the ice accretion on the one probe is primarily from large supercooled droplets. The ice accreting on the one probe is therefore biased to supercooled large droplets. The probes are connected to detection circuitry that will determine the ratio of the rates of icing on each ice detector so the presence of supercooled large droplets can be determined.

### SUMMARY

A system according to the invention includes the features of independent claim 1.

A method according to the invention includes the features of independent claim 14.

Further embodiments of the invention are set out in the following numbered paragraphs:
1. A system for an aircraft comprising:
   an ice rate meter probe operable to acquire a measured liquid water content (Measured LWC); and
   an ice rate module in communication with said ice rate meter probe, said ice rate module operable to determine a virtual aspiration factor, and to determine a representation of an actual liquid water content using at least said virtual aspiration factor and the Measured LWC, wherein said representation is suitable for use to adjust at least a portion of a deice system.
2. The system as recited in paragraph 1, wherein said virtual aspiration factor includes a factor which is a function of aircraft airspeed.
3. The system as recited in paragraph 1, wherein said virtual aspiration factor includes a factor which is a function of outside air temperature.
4. The system as recited in paragrah 1, wherein said virtual aspiration factor includes a factor which is a function of pressure altitude.
5. The system as recited in paragrah 1, wherein said virtual aspiration factor includes a factor which is a function of water drop size.
6. The system as recited in paragraph 1, wherein said virtual aspiration factor includes a factor which is a function of at least one of: an aircraft airspeed, an outside air temperature, a pressure altitude, or a water drop size.
7. The system as recited in paragraph 1, wherein said ice rate moduLe is operable to determine said virtual aspiration factor relative to aircraft data.
8. The system as recited in paragraph 1, further comprising a flight control computer, and wherein said ice rate module is in communication with said flight control computer.
9. The system as recited in paragraph 8, further comprising a sensor suite in communication with said flight control computer, said sensor suite operable to determine aircraft data.
10. The system as recited in paragraph 9, wherein said aircraft data includes data representative of an aircraft airspeed and suitable for use by the ice rate module for determination of said virtual aspiration factor.
11. The system as recited in paragraph 9, wherein said aircraft data includes data representative of a pressure altitude and suitable for use by the ice rate module for determination of said virtual aspiration factor.
12. The system as recited in paragraph 9, wherein said aircraft data includes data representative of a temperature and suitable for use by the ice rate module for determination of said virtual aspiration factor.
13. The system as recited in paragraph 9, wherein said aircraft data includes data representative of a supercooled water drop diameter and suitable for use by the ice rate module for determination of said virtual aspiration factor.
14. The system as recited in paragraph 9, further comprising said deice system in communication with said flight control computer to deice at least one aircraft component, wherein said flight control computer adjusts said deice system based at least in part on information corresponding to said representation.
15. The system as recited in paragraph 9, further comprising a cockpit display system in communication with said flight control computer.
16. The system as recited in paragraph 1, farther comprising a deice system in communication with said ice rate module to deice at least one aircraft component.
17. The system as recited in paragraph 16, further comprising a sensor suite in communication with said ice rate module, said sensor suite operable to determine aircraft data wherein said ice rate module adjusts said deice system based at least in part on said aircraft data.
18. The system as recited in paragraph 1, further comprising a flight control computer, and wherein said ice rate module is in communication with said flight control computer.
19. The system as recited in paragraph 18, further comprising a sensor suite in communication with said flight control computer, said sensor suite operable to determine aircraft data.
20. The system as recited in paragraph 19, further comprising a deice system in communication with a flight control computer to deice at least one aircraft component wherein said flight control computer adjusts said deice system based at least in part on said aircraft data.
21. A method comprising:
   acquiring measured liquid water content (Measured LWC) data from an ice rate meter probe;
   acquiring measured data from an aircraft sensor suite;
   correlating a virtual aspiration factor with the measured data from the aircraft sensor suite; and
   determining an actual liquid water content (Actual LWC) by applying the virtual aspiration factor to the measured liquid water content data.
22. A method as recited in paragraph 21, wherein determining the actual liquid water content includes the function: Actual LWC = a value corresponding to a function of aircraft airspeed x Measured LWC.
23. A method as recited in paragraph 21, wherein determining the actual liquid water content includes the function: Actual LWC = (a value corresponding to a function of aircraft airspeed x measured LWC) + (a value corresponding to a function of static or total temperature x measured LWC) + (a value corresponding to a function of pressure altitude x measured LWC) + (a value corresponding to a function of supercooled water drop diameter x measured LWC).
24. A method as recited in paragraph 21, further comprising:
   using said actual liquid water content to adjust a deice system.
25. A method as recited in paragraph 21, further comprising:
   communicating a representation of the actual liquid water content to a deice system; and
   adjusting the deice system at least in part on said representation
26. A method comprising:
   acquiring measured data from an aircraft sensor suite;
   multiplying a virtual aspiration factor which is a function of the measured data by a measured liquid water content (Measured LWC) to obtain an actual liquid water content (Actual LWC); and
   using said Actual LWC to adjust a deice system of an aircraft.
27. A method as recited in paragraph 26, wherein the virtual aspiration factor includes a factor which is a function of true airspeed.

### BRIEF DESCRIPTION OF THE DRAWINGS

The various features and advantages of this invention will become apparent to those skilled in the art from the following detailed description of the disclosed non-limiting embodiment. The drawings that accompany the detailed description can be briefly described as follows:
Figure 1 is a general perspective view of one exemplary rotary wing aircraft embodiment for use with the present invention;
Figure 2 is a block diagram of an ice protection system according to one embodiment of the present invention;
Figure 3 is a graphical representation of a measured LWC (Measured LWC) divided by an actual LWC (Actual LWC) illustrating a compensating virtual aspiration between a nominal zero error LWC measurement and a LWC measurement without aspiration;
Figure 4 is a graphical representation of an example curve for a ratio of the probe error as a function of bleed air. This curve is based on the subtraction of truth (in this case a liquid water content value of 0.5 grams/cubic meter) from the probe value;
Figure 5 is a plot of the values of error ratio at zero bleed air pressure. Data used is the same as in Figure 4.;

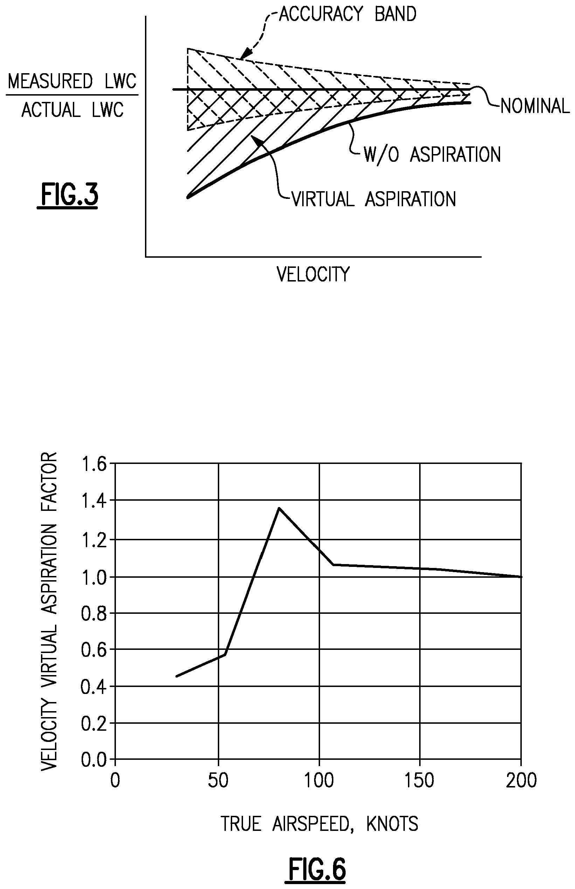

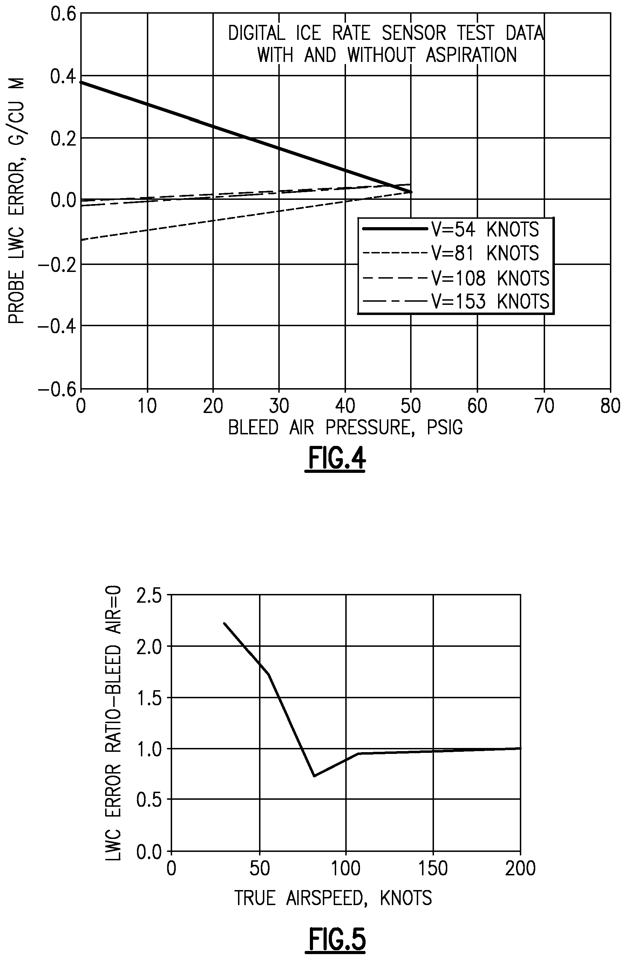

Figure 6 is a plot of the "velocity virtual aspiration factor" that utilizes the data in Figure 4 and corrects an actual probe output and produces values that replicate "truth" (e.g., actual liquid water content values) This curve is essentially the inverse of the Figure 5 curve. An ice rate meter with virtual aspiration includes a programmed equation that accounts for the errors of an aspirated probe, but with a magnitude that accounts for the effects of aspiration which results in an ice rate meter probe that meets accuracy requirements without the air of bleed air flow. The programmed equation or equations are suitable to provide required accuracy when the aspiration bleed air flow is eliminated.;
Figure 7 is a plot of a "pressure altitude virtual aspiration factor" that may be utilized in combination with the "velocity virtual aspiration factor";
Figure 8 is a plot of a "static temperature altitude virtual aspiration factor" that may be utilized in combination with the "velocity virtual aspiration factor"; and
Figure 9 is a schematic flowchart representation of the ice rate measurement performed by the ice protection system.

### DETAILED DESCRIPTION OF THE EXEMPLARY EMBODIMENTS

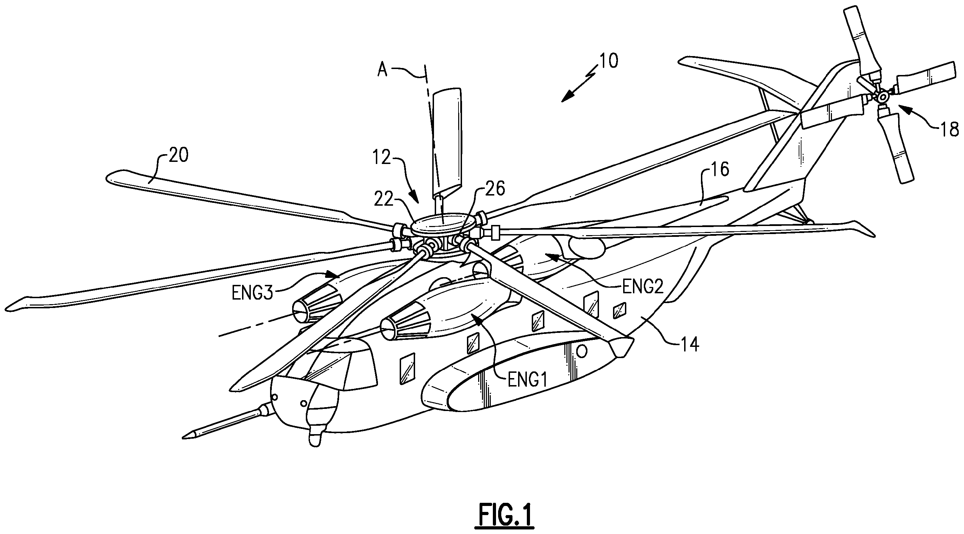

Figure 1 schematically illustrates an exemplary vertical takeoff and landing (VTOL) rotary-wing aircraft 10. The aircraft 10 in the disclosed, non-limiting embodiment includes a main rotor system 12 supported by an airframe 14 having an extending tail 16 which mounts an antitorque system 18 such as a tail rotor system. The main rotor assembly 12 is driven about an axis of rotation R through a main gearbox MRG by one or more engines ENG (in this example, three engines ENG1-ENG3 are shown). The main rotor system 12 includes a multiple of rotor blades 20 mounted to a rotor hub 22. Although a particular VTOL rotary-wing aircraft configuration is illustrated and described in the exemplary embodiment, other configurations and/or machines, such as high speed compound rotary wing aircraft with supplemental translational thrust systems, dual contra-rotating, coaxial rotor system aircraft, fixed wing aircraft, VTOL aircraft, turbo-props, tilt-rotors and tilt-wing aircraft, will also benefit herefrom.

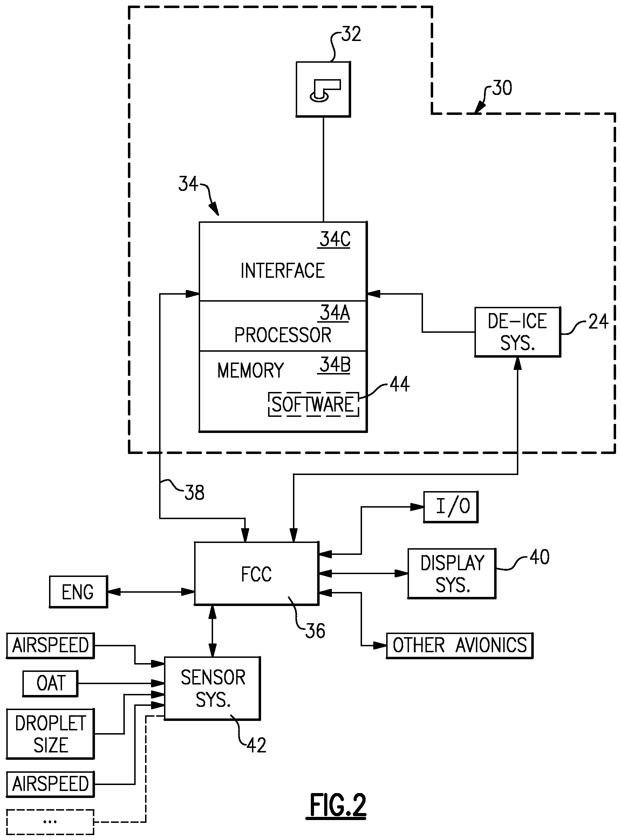

Referring to Figure 2, an ice protection system 30 is schematically illustrated in a block diagram format. The ice protection system 30 generally includes an ice rate meter probe 32 in communication with an ice rate module 34.

The ice rate module 34 typically includes a processor 34A, a memory 34B, and an interface 34C for communicating with other avionics, systems and components such as a central flight control computer (FCC) 36. The ice rate module 34, in one non limiting embodiment, is in communication with the FCC 36 over a digital data bus 38. The ice rate module 34 may operate to control a deice system 24 directly or through the FCC 36. The deice system 24 may include, for example only, a leading edge heater mat within each rotor blade 20 (Figure 1).

The FCC 36 is in communication with other avionics systems and components such as the aircraft engines ENG, a cockpit instrument display system 40 and an aircraft sensor suite 42. Although the FCC 36 is schematically illustrated as a single block, it should be understood that the FCC 36 herein may include multiple computers having multiple channels and multiple redundant subsystems.

The cockpit instrument display system 40 typically includes one or more analog and/or digital displays in electrical communication with the FCC 36. The cockpit instrument display system 40 operates to control avionics and to display data therefrom as symbology to interface with an aircrew. Although the cockpit instrument display system 40 is illustrated as a single block, it should be understood that the cockpit instrument display system 40 may include multiple subsystems such as data concentrator units (DCUs), multifunction displays (MFDs), primary flight displays (PFDs) and other systems such as line replaceable units (LRUs).

The aircraft sensor suite 42 communicates data to the FCC 36. With aircraft digital busses, sensor data available to the FCC 36 such as, for example only, airspeed, outside air temperature (OAT), pressure altitude, water drop size, and such like aircraft data is also thereby available to the ice rate module 34. The ice rate module 34 may store data, software and control algorithms such as a virtual aspiration software 44 to correct the measured ice accretion on the ice rate meter probe 32 in the memory device 34C for operation of the processor 34A. The data, software and control algorithms may alternatively be stored in the memory 34B as RAM, ROM or other computer readable medium either in the ice rate module 34 and/or the FCC 36. The stored data, software and control algorithms are one example of a scheme by which decisions are made and operations are performed based thereon.

The virtual aspiration software 44 can enhance the accuracy of ice rate measurement and eliminate the heretofore need for bleed air aspiration of the ice rate meter probe active element. The ice rate module 34 utilizes a virtual aspiration factor to provide virtual aspiration for the ice rate meter probe 32. It should be understood that airspeed, outside air temperature (OAT), pressure altitude, water drop size, and such like sensor data and data parameters derived therefrom, which are available to the FCC 36 may alternatively, additionally or in various combinations be utilized to provide the virtual aspiration, wherein the virtual aspiration factor includes a factor which is a function of at least the water drop size. The usage of these data parameters provide an ice rate meter probe 32 that is accurate to relatively low airspeeds at which the angle of flow to the probe becomes so large that the Liquid Water Content (LWC) value would be inaccurate even with actual bleed air aspiration.

The virtual aspiration software 44 with data from the aircraft sensor suite 42 provides the virtual aspiration to correct the measured ice accretion on the ice rate meter probe 32. The virtual aspiration software 44 provides virtual aspiration through, for example only, a virtual aspiration factor. The virtual aspiration factor minimizes the ice rate meter probe 32 error over a wide variation of icing flight conditions. The virtual aspiration factor, in one non-limiting embodiment, is defined through aircraft flight test data, a computational fluid dynamics (CFD) code, and/or by tests in a wind tunnel, which should obtain, e.g., the highest fidelity.

Referring to Figure 3, a nominal zero error Liquid Water Content (LWC) measurement may be defined as a straight line. That is, a measured LWC (Measured LWC) divided by an actual LWC (Actual LWC) results in the nominal zero error LWC measurement when the measured and actual LWC are perfectly accurate. The ice rate meter probe 32 should operate within a particular accuracy band which generally increases as airspeed decreases. Even with the decreasing accuracy that occurs at lower airspeeds, the ice rate meter probe 32 will still provide an error outside of the accuracy band without aspiration. An example curve for a ratio of the probe error as a function of bleed air is illustrated in Figure 4. An example plot of the values of error ratio at zero bleed air pressure is illustrated in Figure 5.

The virtual aspiration software 44 includes at least one virtual aspiration factor (see, e.g., Figure 6) to reduce ice rate meter probe 32 error. The virtual aspiration software 44 accounts for the errors of an aspirated probe, but with a magnitude that accounts for the effects of aspiration. The result is an ice rate meter probe 32 (and associated ice protection system 30) that meets accuracy requirements without bleed air flow. Even an airspeed-related correction factor alone provided by the virtual aspiration software 44 can be applied to drive the data from the ice rate meter probe 32 to essentially zero error. That is, the virtual aspiration software 44 provides an Actual LWC determined by a Measured LWC from the ice rate meter probe 32 multiplied by the velocity virtual aspiration factor. A velocity virtual aspiration factor (see, e.g., Figure 6) utilizes the error ratio at zero bleed air pressure (see Figure 5) and corrects the actual ice rate meter probe output to generate values that replicate true LWC (e.g.,, actual LWC). The Figure 6 curve is in an example essentially the inverse of the Figure 5 curve.

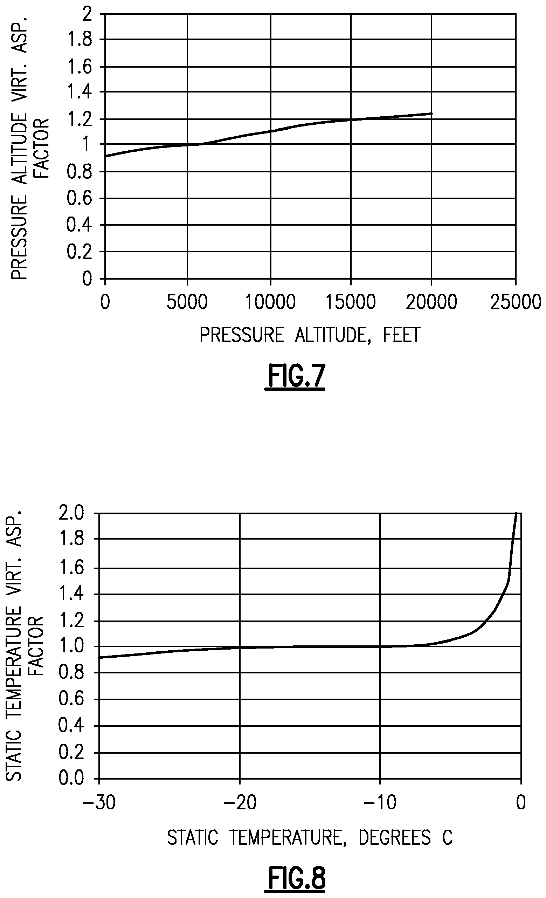

Similar virtual aspiration factor plots may be utilized for any other parameter, such as a pressure altitude virtual aspiration factor (Figure 7), a static temperature virtual aspiration factor (Figure 8), drop diameter or such like.

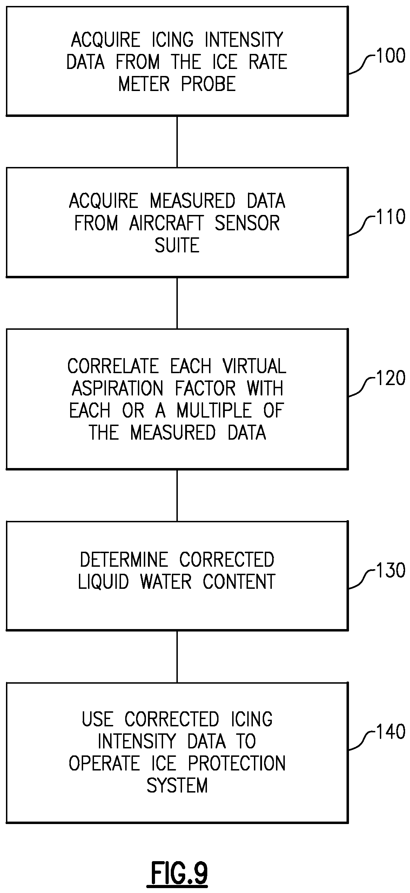

In operation and with reference to Figure 9, the calculation of liquid water content (LWC) by the virtual aspiration software 44 may proceed generally as follows.

In step 100, icing intensity liquid water content data sample (e.g., Measured LWC) is acquired in icing conditions from the ice rate meter probe 32.

In step 110, measured data is acquired from the aircraft sensor suite 42, (e.g., Measured LWC from the ice rate meter probe 32; true airspeed; outside air temperature (OAT); pressure altitude; drop diameter; etc.) typically available to the FCC 36.

In step 120, the virtual aspiration factor is correlated with one or a multiple of the measured data (e.g., true airspeed; outside air temperature (OAT); pressure altitude; drop diameter; etc).

In step 130, the Actual LWC is determined by multiplying the virtual aspiration factor (which could be a matrix of factors) by the appropriate measured data from the aircraft sensor suite (including the Measured LWC from the ice rate meter probe 32). In one non limiting embodiment, the Actual LWC = Velocity Virtual Aspiration Factor (a function of true airspeed) multiplied by ("x") measured LWC. It should be understood that the Velocity Virtual Aspiration Factor could be a function of variables other than velocity.

In another non limiting embodiment, the Actual LWC = (Velocity Virtual Aspiration Factor (a function of true airspeed) x measured LWC) added to ("+"+ (Temperature Virtual Aspiration Factor (a function of static or total temperature) x measured LWC) + (Pressure Altitude Virtual Aspiration Factor (a function of pressure altitude) x measured LWC) + (Drop Diameter Virtual Aspiration Factor (a function of supercooled water drop diameter) x measured LWC). These factors may alternatively or additionally be weighted. That is, various combination of various Virtual Aspiration Factors may alternatively or additionally be utilized.

In step 140, the Actual LWC is then utilized to perform the desired aircraft operations such as, for example only, operation of the deice system 24, display by cockpit instrument display system 40 and such like.

Ice rate meter probe 32 in combination with ice rate module 34 with virtual aspiration, as part of the ice protection system 30, provides an accurate ice accretion measurement over the full range of the aircraft flight envelope for operation in icing conditions which eliminates bleed aspirations, reduces ice rate meter costs and complexity, reduces system weight, improves reliability, and improves engine performance. By way of example only, Applicant has provided an ice protection system 30 that obtains an approximate 10 percent improvement in reliability and approximately 10 pounds in weight savings at a cost savings compared to current ice rate meter systems.

It should be understood that even an ice rate meter probe originally designed with aspiration capability could be utilized with the present invention by removal of aspiration tubing system and placing a plug in the aspiration input port.

Although particular step sequences are shown, described, and claimed, it should be understood that steps may be performed in any order, separated or combined unless otherwise indicated and will still benefit from the present invention.

The foregoing description is exemplary rather than defined by the limitations within. Many modifications and variations of the present invention are possible in light of the above teachings. Although certain particular exemplary embodiments of this invention have been disclosed, one of ordinary skill in the art would recognize that certain modifications would be within the scope of this invention. It is, therefore, to be understood that within the scope of the appended claims, the invention may be practiced otherwise than as specifically described. For that reason the following claims should be studied to determine the true scope and content of this invention.

## Claims

1. A system for an aircraft (10) comprising:
an ice rate meter probe (32) operable to acquire a measured liquid water content (Measured LWC); and
an ice rate module (34) in communication with said ice rate meter probe (32), **characterized in that** said ice rate module (34) is operable to determine a virtual aspiration factor, said virtual aspiration factor including a factor which is a function of at least a water drop size , and to determine a representation of an actual liquid water content using at least said virtual aspiration factor and the Measured LWC, wherein said representation is suitable for use to adjust at least a portion of a deice system (24).

2. The system as recited in claim 1, wherein said virtual aspiration factor includes a factor which is a function of at least one of: an aircraft airspeed, an outside air temperature, or a pressure altitude.

3. The system as recited in claim 1, wherein said ice rate module (34) is operable to determine said virtual aspiration factor relative to aircraft data.

4. The system as recited in claim 1, further comprising a flight control computer (36), and wherein said ice rate module (34) is in communication with said flight control computer (36).

5. The system as recited in claim 4, further comprising a sensor suite (42) in communication with said flight control computer (36), said sensor suite (42) operable to determine aircraft data.

6. The system as recited in claim 5, wherein said aircraft data includes data representative of an aircraft airspeed and suitable for use by the ice rate module (34) for determination of said virtual aspiration factor.

7. The system as recited in claim 5, wherein said aircraft data includes data representative of a pressure altitude and suitable for use by the ice rate module (34) for determination of said virtual aspiration factor.

8. The system as recited in claim 5, wherein said aircraft data includes data representative of a temperature and suitable for use by the ice rate module (34) for determination of said virtual aspiration factor.

9. The system as recited in claim 5, wherein said aircraft data includes data representative of a supercooled water drop diameter and suitable for use by the ice rate module (34) for determination of said virtual aspiration factor.

10. The system as recited in claim 5, further comprising said deice system (24) in communication with said flight control computer (36) to deice at least one aircraft component, wherein said flight control computer (36) adjusts said deice system (24) based at least in part on information corresponding to said representation.

11. The system as recited in claim 5, further comprising a cockpit display system in communication with said flight control computer (36).

12. The system as recited in claim 1, further comprising a deice system (24) in communication with said ice rate module (34) to deice at least one aircraft component.

13. The system as recited in claim 12, further comprising a sensor suite (42) in communication with said ice rate module (34), said sensor suite (42) operable to determine aircraft data wherein said ice rate module (34) adjusts said deice system (24) based at least in part on said aircraft data.

14. A method comprising:
acquiring measured data from an aircraft sensor suite (42);
**characterized by** further comprising
multiplying a virtual aspiration factor which is a function of the measured data by a measured liquid water content (Measured LWC) to obtain an actual liquid water content (Actual LWC); and
using said Actual LWC to adjust a deice system (24) of an aircraft (10), wherein said virtual aspiration factor includes a factor which is a function of at least a water drop size.

15. A method as recited in claim 14, wherein the virtual aspiration factor includes a factor which is a function of true airspeed.

## Patentansprüche

1. System für ein Luftfahrzeug (10), umfassend:
einen Eisgeschwindigkeitsmesser (32), der betreibbar ist, um einen gemessenen Flüssigwassergehalt (gemessener LWC) zu erfassen; und
ein Eisratenmodul (34) in Verbindung mit dem Eisgeschwindigkeitsmesser (32), **dadurch gekennzeichnet, dass** das Eisratenmodul (34) betreibbar ist, um einen virtuellen Aspirationsfaktor zu bestimmen, wobei der virtuelle Aspirationsfaktor einen Faktor beinhaltet, der eine Funktion von mindestens einer Wassertropfengröße ist, und um eine Darstellung eines tatsächlichen Flüssigwassergehalts unter Verwendung von mindestens dem virtuellen Aspirationsfaktor und dem gemessenen LWC zu bestimmen, wobei die Darstellung geeignet ist, um mindestens einen Abschnitt eines Enteisungssystems (24) anzupassen.

2. System nach Anspruch 1, wobei der virtuelle Aspirationsfaktor einen Faktor beinhaltet, der eine Funktion von mindestens einer der folgenden ist: eine Luftfahrzeuggeschwindigkeit, eine Außenlufttemperatur oder eine Druckhöhe.

3. System nach Anspruch 1, wobei das Eisratenmodul (34) betreibbar ist, um den virtuellen Aspirationsfaktor in Bezug auf Luftfahrzeugdaten zu bestimmen.

4. System nach Anspruch 1, ferner umfassend einen Flugsteuerungscomputer (36), und wobei das Eisratenmodul (34) mit dem Flugsteuerungscomputer (36) verbunden ist.

5. System nach Anspruch 4, ferner umfassend eine Sensoreinheit (42) in Verbindung mit dem Flugsteuerungscomputer (36), wobei die Sensoreinheit (42) zum Bestimmen von Flugzeugdaten betreibbar ist.

6. System nach Anspruch 5, wobei die Flugzeugdaten auch Daten beinhalten, die für eine Luftfahrzeuggeschwindigkeit repräsentativ sind und zum Verwenden durch das Eisratenmodul (34) zum Bestimmen des virtuellen Aspirationsfaktors geeignet sind.

7. System nach Anspruch 5, wobei die Flugzeugdaten auch Daten beinhalten, die für eine Druckhöhe repräsentativ sind und zum Verwenden durch das Eisratenmodul (34) zum Bestimmen des virtuellen Aspirationsfaktors geeignet sind.

8. System nach Anspruch 5, wobei die Flugzeugdaten auch Daten beinhalten, die für eine Temperatur repräsentativ sind und zum Verwenden durch das Eisratenmodul (34) zum Bestimmen des virtuellen Aspirationsfaktors geeignet sind.

9. System nach Anspruch 5, wobei die Luftfahrzeugdaten auch Daten beinhalten, die für einen unterkühlten Wassertropfendurchmesser repräsentativ sind und zum Verwenden durch das Eisratenmodul (34) zum Bestimmen des virtuellen Aspirationsfaktors geeignet sind.

10. System nach Anspruch 5, ferner umfassend das Enteisungssystem (24) in Verbindung mit dem Flugsteuerungscomputer (36), um mindestens eine Luftfahrzeugkomponente zu enteisen, wobei der Flugsteuerungscomputer (36) das Enteisungssystem (24) basierend zumindest teilweise auf Informationen gemäß der Darstellung anpasst.

11. System nach Anspruch 5, ferner umfassend ein Cockpitanzeigesystem in Verbindung mit dem Flugsteuerungscomputer (36).

12. System nach Anspruch 1, ferner umfassend ein Enteisungssystem (24) in Verbindung mit dem Eisratenmodul (34), um mindestens eine Luftfahrzeugkomponente zu enteisen.

13. System nach Anspruch 12, ferner umfassend eine Sensoreinheit (42) in Verbindung mit dem Eisratenmodul (34), wobei die Sensoreinheit (42) betreibbar ist, um Luftfahrzeugdaten zu bestimmen, wobei das Eisratenmodul (34) das Enteisungssystem (24) basierend zumindest teilweise auf den Luftfahrzeugdaten anpasst.

14. Verfahren, umfassend:
Erfassen von Messdaten aus einer Luftfahrzeugsensoreinheit (42) ;
**dadurch gekennzeichnet,**
**dass** sie ferner das Multiplizieren eines virtuellen Aspirationsfaktors, der eine Funktion der Messdaten ist, mit einem gemessenen Flüssigwassergehalt (gemessener LWC) umfasst, um einen tatsächlichen Flüssigwassergehalt (tatsächlicher LWC) zu erhalten; und
Verwenden des tatsächlichen LWC zum Anpassen eines Enteisungssystems (24) eines Luftfahrzeugs (10), wobei der virtuelle Aspirationsfaktor einen Faktor beinhaltet, der eine Funktion von mindestens einer Wassertropfengröße ist.

15. Verfahren nach Anspruch 14, wobei der virtuelle Aspirationsfaktor einen Faktor beinhaltet, der eine Funktion der tatsächlichen Fluggeschwindigkeit ist.

## Revendications

1. Système pour un aéronef (10) comprenant :
une sonde de mesure de taux de givrage (32) pouvant fonctionner pour acquérir un contenu en eau à l'état liquide mesuré (LWC mesuré) ; et
un module de taux de givrage (34) en communication avec ladite sonde de mesure de taux de givrage (32), **caractérisé en ce que** ledit module de taux de givrage (34) peut fonctionner pour déterminer un facteur d'aspiration virtuelle, ledit facteur d'aspiration virtuelle incluant un facteur qui dépend d'au moins une dimension de goutte d'eau, et pour déterminer une représentation d'un contenu en eau à l'état liquide effectif en utilisant au moins ledit facteur d'aspiration virtuelle et le LWC mesuré, dans lequel ladite représentation convient à une utilisation pour ajuster au moins une partie d'un système de dégivrage (24).

2. Système selon la revendication 1, dans lequel ledit facteur d'aspiration virtuelle inclut un facteur qui dépend d'au moins l'une parmi : une vitesse anémométrique d'aéronef, une température de l'air extérieur, ou une altitude barométrique.

3. Système selon la revendication 1, dans lequel ledit module de taux de givrage (34) peut fonctionner pour déterminer ledit facteur d'aspiration virtuelle par rapport à des données d'aéronef.

4. Système selon la revendication 1, comprenant en outre un ordinateur de commande de vol (36), et dans lequel ledit module de taux de givrage (34) est en communication avec ledit ordinateur de commande de vol (36).

5. Système selon la revendication 4, comprenant en outre une série de capteurs (42) en communication avec ledit ordinateur de commande de vol (36), ladite série de capteurs (42) pouvant fonctionner pour déterminer des données d'aéronef.

6. Système selon la revendication 5, dans lequel lesdites données d'aéronef incluent des données représentant une vitesse anémométrique d'aéronef et convenant pour être utilisées par le module de taux de givrage (34) pour déterminer ledit facteur d'aspiration virtuelle.

7. Système selon la revendication 5, dans lequel lesdites données d'aéronef incluent des données représentant une altitude barométrique et convenant pour être utilisées par le module de taux de givrage (34) pour déterminer ledit facteur d'aspiration virtuelle.

8. Système selon la revendication 5, dans lequel lesdites données d'aéronef incluent des données représentant une température et convenant pour être utilisées par le module de taux de givrage (34) pour déterminer ledit facteur d'aspiration virtuelle.

9. Système selon la revendication 5, dans lequel lesdites données d'aéronef incluent des données représentant un diamètre de goutte d'eau en surfusion et convenant pour être utilisées par le module de taux de givrage (34) pour déterminer ledit facteur aspiration virtuelle.

10. Système selon la revendication 5, comprenant en outre ledit dispositif de dégivrage (24) en communication avec ledit ordinateur de commande de vol (36) pour dégivrer au moins un élément d'aéronef, dans lequel ledit ordinateur de commande de vol (36) ajuste ledit système de dégivrage (24) sur la base, au moins en partie, d'informations correspondant à ladite représentation.

11. Système selon la revendication 5, comprenant en outre un système d'affichage de poste de pilotage en communication avec ledit ordinateur de commande de vol (36).

12. Système selon la revendication 1, comprenant en outre un système de dégivrage (24) en communication avec ledit module de taux de givrage (34) pour dégivrer au moins un élément d'aéronef.

13. Système selon la revendication 12, comprenant en outre une série de capteurs (42) en communication avec ledit module de taux de givrage (34), ladite série de capteurs (42) pouvant fonctionner pour déterminer des données d'aéronef dans lequel ledit module de taux de givrage (34) ajuste ledit système de dégivrage (24) sur la base, au moins en partie, desdites données d'aéronef.

14. Procédé comprenant :
l'acquisition de données mesurées à partir d'une série de capteurs d'aéronef (42) ;
**caractérisé en ce qu'**il comprend en outre
la multiplication d'un facteur d'aspiration virtuelle qui dépend des données mesurées par un contenu en eau à l'état liquide mesuré (LWC mesuré) pour obtenir un contenu en eau à l'état liquide effectif (LWC effectif) ; et
l'utilisation dudit LWC effectif pour ajuster un système de dégivrage (24) d'un aéronef (10), dans lequel ledit facteur aspiration virtuelle inclue un facteur qui dépend d'au moins une dimension de goutte d'eau.

15. Procédé selon la revendication 14, dans lequel le facteur d'aspiration virtuelle inclut un facteur qui dépend d'une vitesse anémométrique réelle.
